# EUROPEAN PATENT SPECIFICATION

(11) **EP 2 862 977 B1**
(45) Date of publication and mention of the grant of the patent: **18.10.2023**
(21) Application number: 13803645.4
(22) Date of filing: 13.06.2013
(51) Int. Cl.: D21H 21/42, B32B 7/02

(54) **COUNTERFEITING PREVENTION PAPER**
FÄLSCHUNGSSICHERES PAPIER
PAPIER ÉVITANT LA CONTREFAÇON

(30) Priority: 15.06.2012 JP 2012136205
(43) Date of publication of application: 22.04.2015
(73) Proprietor: Toppan Printing Co., Ltd., Tokyo 110-0016 (JP)
(72) Inventor: IDE, Hidetaka, Tokyo 110-0016 (JP)
(74) Representative: Plasseraud IP
(86) International application number: PCT/JP2013/066382
(87) International publication number: WO 2013/187484

(56) References cited:
- EP-A1- 2 477 051
- JP-A- 2000 345 496
- JP-A- 2003 193 400
- JP-A- 2008 119 910
- JP-A- 2008 119 910
- JP-A- 2010 043 393
- JP-A- 2011 173 379
- JP-A- 2011 173 379
- JP-A- 2012 255 239
- JP-A- 2013 104 141

## Description

### Technical Field

The present invention relates to the prevention of counterfeiting of, for example, paper money and valuable securities made of paper such as stock certificates, bond certificates, gift certificates, and lottery tickets, and more particularly relates to a paper which is extremely difficult to counterfeit or alter when counterfeiting or alteration is attempted using an electronic copying machine.

### Background Art

At present, papers are widely used as paper money, and also as valuable securities with monetary value such as stock certificates, bond certificates, gift certificates, and lottery tickets. Papers to be used for such valuable securities are generally subjected to a treatment so that counterfeiting or alteration cannot be easily performed as follows: papers per se are watermarked; special printing such as micro-character printing, intaglio printing, hidden character printing, or fluorescent printing is performed; a metallic gloss foil such as a gold foil or a silver foil, or a foil with a hologram or a diffraction structure such as a diffraction grating capable of expressing a three-dimensional image or a special decorative image using interference of light is transferred or stuck (see, for example, patent literature PTL 1 and PTL 2 below).

Among these, as a method and a structure for forming a watermark, a method such as a white watermarking method or a black watermarking method in which a pattern is formed by changing the thickness of a paper using a special paper making machine, a structure in which a base material printed with a watermark pattern in advance is prepared, and a paper base material is bonded to the front and back surfaces of the base material, a method in which a coloring material is applied to a base material in advance, a paper base material is bonded to the front and back surfaces of the base material, and the resulting material is irradiated with a laser in the end, whereby a watermark image is obtained, and so on have been proposed (see, for example, patent literature PTL 3 and PTL 4 below). JP 2011 173379 A discloses a display structure for preventing forgery which has a relief structure having recessed portions that are uniformly arranged, wherein the recessed parts may be arranged irregularly.

### Citation List

### Patent Literature

PTL 1: Japanese Patent No. 1615000
PTL 2: JP-A-4-149585
PTL 3: JP-A-2002-67470
PTL 4: Japanese Patent No. 4391287

### Summary of Invention

However, a diffraction structure as the above-described measures for prevention of counterfeiting is processed into a sticker, a transfer foil, or the like, and then, stuck to a sticking target material, and therefore, such a sticker or a transfer foil is peeled off and stuck again to a counterfeit to effect alteration, or a counterfeited diffraction structure is stuck and so on, and such counterfeiting is increasing, and therefore, it has a problem that the anti-counterfeit effect thereof is decreasing.

Further, when the determination of genuineness of valuable securities or paper money is performed, a watermark in the paper is still effective at present, and therefore, a watermark has been used in an actual anti-counterfeit paper. However, in Japan, a watermarked paper produced in private companies is limited only to two gradations called a white watermarking method, and a watermarked paper using a black watermarking method with multiple gradations is used only for paper money.

Further, in such a watermarked paper, a watermark is formed by utilizing a change in the light transmittance due to a change in the thickness of a paper base material, and therefore, in the case of forming a light watermark, it is necessary to decrease the thickness of the paper base material so that the strength is decreased, and in order to enhance the contrast effect of the watermark, it is necessary to increase a difference in the thickness of the surface layer of a paper in the watermarked portion, and as a result, irregularities are formed on the watermarked paper per se, and therefore, it has a problem that the printability in the watermarked portion is deteriorated.

The present invention solves the problems of the conventional art and has its object to provide an anti-counterfeit paper which has high strength and high surface smoothness, and also is difficult to alter or counterfeit.

According to claim 1 of the invention, an anti-counterfeit paper, which includes an intermediate layer enclosed in a paper layer, and in which the intermediate layer is composed of a base material which is transparent and has a uniform thickness of 6 micrometers (µm) to 200 µm, and at least a portion of at least one surface of the intermediate layer has minute irregularities having a shape varying from place to place, and having a difference in height in the range of 10 nanometers (nm) to 700 nm and an aspect ratio in the range of 0.5 to 10, and at least a portion of a surface in contact with the minute irregularities has a reflection layer, is provided. Preferred embodiments are defined by the dependent claims as follows.

The reflection layer is provided in a portion of the intermediate layer.

The intermediate layer is embedded in the paper layer.

A portion of the intermediate layer is exposed on at least one surface of the anti-counterfeit paper.

The minute irregularities of the intermediate layer are provided in a given pattern, and the position of the pattern and the position of the portion where the intermediate layer is exposed on the anti-counterfeit paper are aligned one with another.

In at least a portion of at least one surface of the intermediate layer including as the base material, a polymeric resin film having a uniform thickness of 6 µm to 200 µm, minute irregularities varying from place to place and having a difference in height in the range of 10 nm to 700 nm and an aspect ratio in the range of 0.5 to 10 are provided in a pattern such as a letter, a design, or a figure, and further, a reflection layer is laminated on a surface in contact with the minute irregularities. According to this, when a visible light is incident on this intermediate layer, the light is divided into a light transmitted through the intermediate layer and a light reflected from the intermediate layer. By enclosing this intermediate layer in the paper layer, when this paper is observed with the transmitted light, the visible light transmittance is changed due to a difference in the shape of the minute irregularities provided on the intermediate layer, and as a result, it becomes possible to obtain a watermarked image with a continuous gradation.

Further, because of having the intermediate layer, it becomes possible to form an anti-counterfeit paper having high strength. Further, the change in the thickness of the intermediate layer is merely 10 nm to 700 nm, which is the difference in the height of the minute irregularities, if the variation in the thickness of the base material per se and the variation in the thickness of the reflection layer are excluded, and therefore, the thickness of the intermediate layer changes little and is substantially uniform, and thus, an anti-counterfeit paper which is easy to enclose the intermediate layer and has an effect of a watermark with a continuous gradation can be achieved.

When the reflection layer is provided not on the entire intermediate layer or the entire minute irregularities, but on at least a portion thereof, the counterfeiting thereof can be made more difficult.

When the intermediate layer is completely embedded in the paper layer, and even after the paper is cut as the anti-counterfeit paper, the intermediate layer is not exposed on an edge portion of the anti-counterfeit paper, and therefore, the counterfeiting or alteration thereof can be made difficult.

When a portion of the intermediate layer is exposed on at least one surface of the anti-counterfeit paper, the anti-counterfeit paper enables easy determination of genuineness by visually observing an optical change due to the minute irregularities and the reflection layer provided for the intermediate layer in a front light environment.

When the minute irregularities of the intermediate layer are provided in a given pattern, and the position of the pattern of the irregularities of the intermediate layer and the position of the portion where the intermediate layer is exposed on the paper are aligned one with another, when a light is incident on the intermediate layer exposed on the paper, the minute irregularities function as an OVD (optical variable device) which causes an optical change, and therefore, easy determination of genuineness can be achieved, and also the counterfeiting thereof can be made difficult.

That is, according to the present invention, minute irregularities are formed on the intermediate layer while precisely controlling the shape of the minute irregularities, and a reflection layer is laminated on these minute irregularities so that the visible light transmittance is continuously changed, whereby a given watermark with a continuous gradation can be obtained, a variation in the thickness of the intermediate layer is small, the strength and smoothness are high regardless of the brightness of the watermark, and the processability of printing and transferring is improved. Further, in the case where a portion of the intermediate layer is exposed on the paper layer, the exposed portion can be made to function as an OVD which exhibits an optical change, and therefore, the ease of determination of genuineness, a high anti-counterfeit effect, and further, favorable printing processability can be all highly achieved.

### Brief Description of Drawings

[Fig. 1] Fig. 1 is a plan view showing an anti-counterfeit paper according to an embodiment of the present invention in a state in a front light environment.
[Fig. 2] Fig. 2 is a plan view showing the same of Fig. 1 in a state in a backlight environment.
[Fig. 3] Fig. 3 is a cross-sectional view showing the cross section taken along the line A-A in Fig. 2.
[Fig. 4] Fig. 4 is a cross-sectional view showing an enlarged portion A' in Fig. 3.
[Fig. 5] Fig. 5 is a cross-sectional view showing an enlarged portion A" in Fig. 4.
[Fig. 6] Fig. 6 is a plan view showing an anti-counterfeit paper according to another embodiment of the present invention in a state in a front light environment.
[Fig. 7] Fig. 7 is a plan view showing the same of Fig. 6 in a state in a backlight environment.
[Fig. 8] Fig. 8 is a cross-sectional view showing the cross section taken along the line B-B in Fig. 7.
[Fig. 9] Fig. 9 is a plan view showing an anti-counterfeit paper according to still another embodiment of the present invention in a state in a front light environment.
[Fig. 10] Fig. 10 is a plan view showing the same of Fig. 9 in a state in a backlight environment.
[Fig. 11] Fig. 11 is a cross-sectional view showing the cross section taken along the line C-C in Fig. 10.

### Description of Embodiments

Hereinafter, an anti-counterfeit medium and an anti-counterfeit paper according to an embodiment of the present invention will be described in detail with reference to the accompanying drawings.

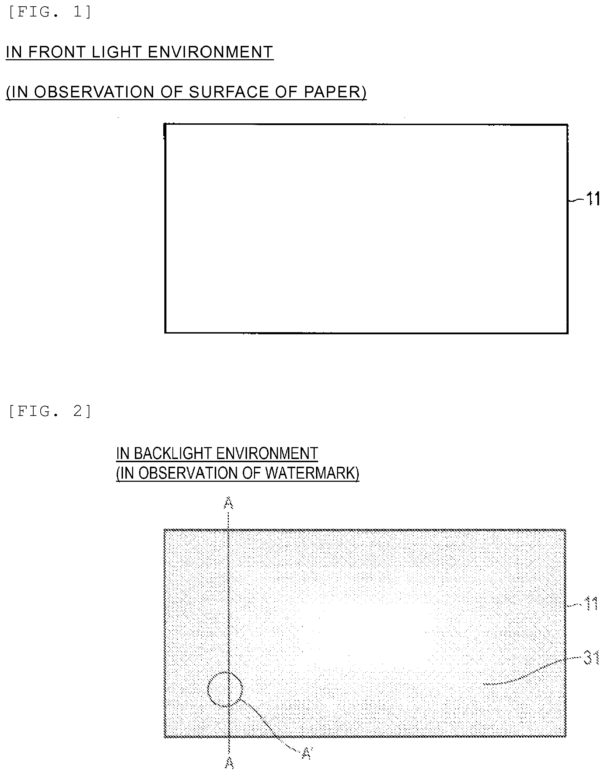

Fig. 1 shows the surface of an anti-counterfeit paper 11 according to a first embodiment of the present invention in a front light environment, and a watermark pattern 31 (see Fig. 2) is not seen. When this anti-counterfeit paper 11 is placed in a backlight environment, as shown in Fig. 2, a difference in the light transmission intensity due to an intermediate layer 2, which will be described below, appears as a cross-shaped watermark pattern 31.

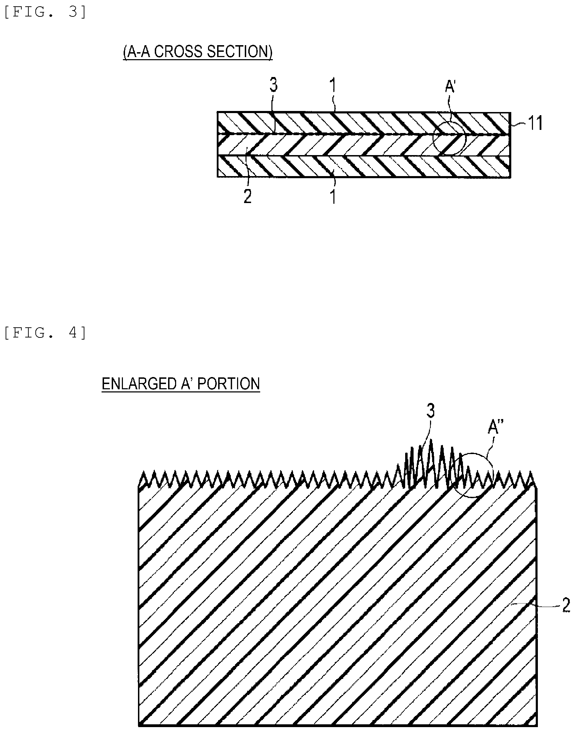

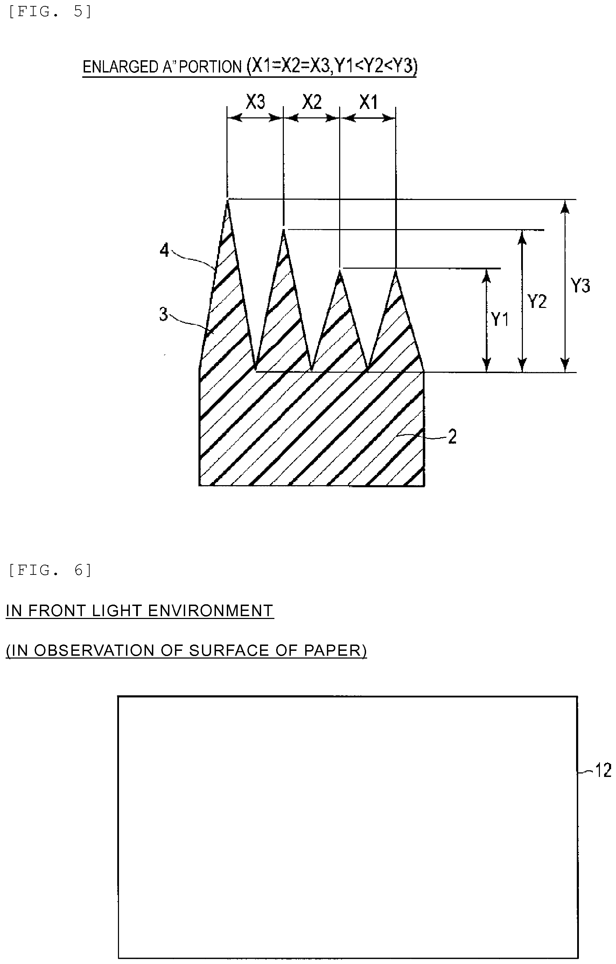

That is, in the anti-counterfeit paper 11, as shown in Fig. 3, the intermediate layer 2 is enclosed in a paper base material 1, and minute irregularities 3 are formed on at least one surface of this intermediate layer 2. The shape of these minute irregularities 3 varies from place to place as shown in Fig. 4, and by controlling this difference in the shape, specifically, the angle of the slope of each irregularity structure and the depth thereof as shown in Fig. 5, the thickness of a reflection layer 4 laminated on these minute irregularities 3 is precisely controlled, whereby the transmission and reflection of a visible light can be controlled.

The minute irregularities 3 formed on this intermediate layer 2 has an aspect ratio, which is a value expressed by the ratio of the pitch of the convex portions of the minute irregularities 3 to the height thereof (Ya/Xa, see Fig. 5, provided that a represents an arbitrary number) . For example, the respective pitches X1, X2, and X3 of the convex portions are constant, and the heights of the convex portions are different, and in such a case, the aspect ratio of the irregularity based on the height Y3 and the pitch X3 of the convex portion is larger than the aspect ratio of the irregularity based on the height Y1 and the pitch X1 of the convex portion.

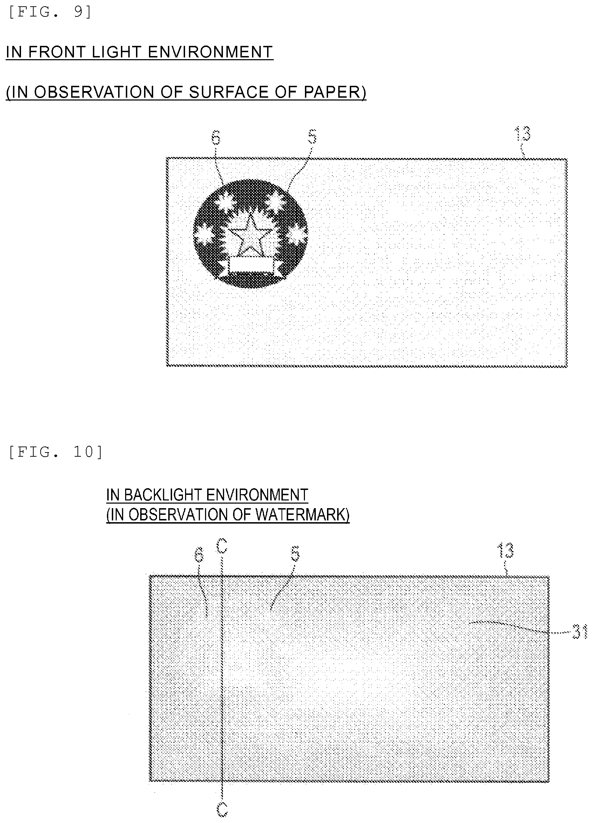

Further, the present invention is not limited to the first embodiment described above, and other than this, for example, a second embodiment shown in Figs. 6 to 8, or a third embodiment shown in Figs. 9 to 11 can be configured, and the same effect is expected.

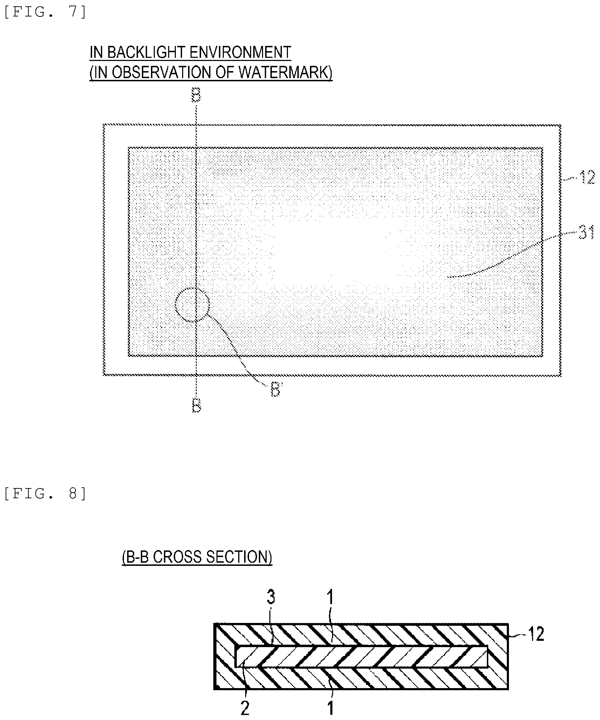

In the second embodiment, in a front light environment shown in Fig. 6, in an anti-counterfeit paper 12, a watermark pattern 31 is not seen. However, in a backlight environment shown in Fig. 7, a cross-shaped watermark pattern 31 appears. In this anti-counterfeit paper 12, as shown in Fig. 8, an intermediate layer 2 is completely enclosed in a paper base material 1, and a difference in the light transmission intensity due to the intermediate layer 2 appears as the cross-shaped watermark pattern 31.

That is, this anti-counterfeit paper 12 is in a state where the intermediate layer 2 is completely enclosed in the paper base material 1. Therefore, in a portion where the intermediate layer 2 is enclosed, the thickness of the paper base material 1 is increased, and therefore, in a backlight environment, as indicated by a peripheral (dark gray) portion of the anti-counterfeit paper 12 in Fig. 7, the peripheral portion is in a state where the transmitted light is less than in a portion where the intermediate layer is not enclosed, and a difference in the light transmission intensity appears as the cross-shaped watermark pattern 31.

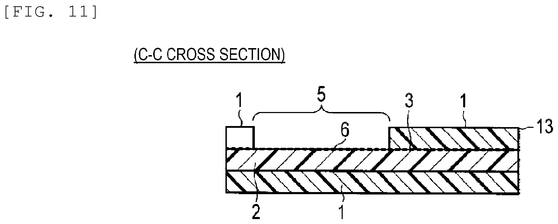

Further, in the third embodiment, in a front light environment shown in Fig. 9, a watermark pattern 31 is not seen in the same manner. However, a window part 5 where an intermediate layer 2 is exposed is formed in a portion thereof (see Fig. 11). The position of this window part 5 and the position of an arbitrary design 6 formed by minute irregularities of the intermediate layer 2 are aligned one with another. The pattern of this design 6 can be confirmed in a front light environment, and further the minute irregularities 3 serve as an OVD, and therefore, for example, the shading of the design changes depending on an observation angle, or an image can be changed by a special filter.

Further, in a state where the anti-counterfeit paper 13 is observed in a backlight environment, as shown in Fig. 10, a cross-shaped pattern due to the intermediate layer 2 in the paper layer is clearly visually recognized. Further, in the window part 5, the design 6 due to the minute irregularities 3 and the reflection layer 4 formed on the exposed intermediate layer 2 is observed as a design of shading which is different from that observed in a front light environment.

Incidentally, the window part 5 may be provided on both surfaces of the anti-counterfeit paper 13. Then, the minute irregularities 3 on the intermediate layer 2 may be formed on the opposite surface to the window part 5.

Further, the optical effect of the combination of the minute irregularities 3 and the reflection layer 4 is not particularly limited in the present invention as long as the minute irregularities 3 have a difference in height in the range of 10 nm to 700 nm and an aspect ratio in the range of 0.5 to 10 as described above.

Further, when a cross grating arrangement is adopted as the plane arrangement of the minute irregularities 3, the transmittance does not change also when the anti-counterfeit paper is obliquely viewed from the left, right, top, and bottom, and the visibility of the watermark is high, and therefore, such an arrangement is desirable. Further, when a stripe arrangement is adopted as the plane arrangement of the minute irregularities 3, unlike a general watermark, a subtle difference in the transmittance occurs when the anti-counterfeit paper is viewed vertically and horizontally, and therefore, a watermark having a higher anti-counterfeit effect can be realized.

Next, the materials of the respective layers constituting the anti-counterfeit paper of the present invention, the method for forming the same, and the like will be described in detail.

As the raw material of the paper base material 1, a plant pulp such as a softwood, a hardwood, cotton, rice, esparto, bagasse, hemp, flax, kenaf, or cannabis, or a synthetic fiber produced from a plastic such as polyethylene terephthalate, polypropylene, polyacrylate, or polyvinyl chloride is used.

Subsequently, the plant pulp or the synthetic fiber is beaten in water to obtain a dilute raw material in water, which is then subjected to a paper making process to tangle the raw material, followed by dehydration and drying, whereby the paper base material 1 is formed. At this time, the paper obtains the strength between fibers through a hydrogen bond between hydroxy groups of cellulose serving as the raw material. Further, as a filler to be used for the paper, clay, talc, calcium carbonate, titanium dioxide, or the like is used, and as a sizing agent, rosin, an alkyl ketene dimer, stearic anhydride, alkenyl succinic anhydride, a wax, or the like is used. As a paper strengthening agent, modified starch, polyvinyl alcohol, polyacrylamide, urea-formaldehyde, melamine-formaldehyde, polyethylenimine, or the like is used. These materials are appropriately added to the dilute raw material in water as needed.

Further, a paper making method for the anti-counterfeit paper of the present invention may be a conventional sukiawase method (a method in which a base paper is made, and thereafter another paper is made thereon and combined with the previously made base paper) for a plant fiber paper. Fibers sufficiently swollen in a dilute raw material in water having a raw material concentration of 0.5% to 10%, preferably 1% to 2% are well kneaded, poured and arranged on a screen or mesh like wire part, and water is squeezed out, followed by heating to evaporate water, whereby the anti-counterfeit paper is made. At this time, before water is squeezed out, the intermediate layer 2 is disposed between the upper side of the paper base material 1 and the lower side of the paper base material 1, and then, water is squeezed out while superimposing the three layers on one another, followed by heating, whereby the intermediate layer 2 is enclosed in the paper base material 1 while closely adhering the three layers to one another.

Further, in the case where, for example, synthetic fibers other than the plant fibers are mixed, the synthetic fibers do not have a bonding strength such as a hydrogen bond therebetween, and therefore, a binder is needed in many cases. The ratio of the synthetic fibers and the amount of the binder are desirably determined appropriately so that the strength of the paper is not deteriorated.

The intermediate layer 2 is configured such that minute irregularities 3 are formed on a base material composed of a transparent polymeric resin film, and further a reflection layer 4 is laminated so as to be in contact with the minute irregularities 3. If necessary, on the intermediate layer base material, an irregularity forming layer is separately provided, and the minute irregularities 3 are formed on the irregularity forming layer, or in order to improve the adhesiveness between the paper base material 1 and the intermediate layer 2, a bonding layer, an adhesion assisting layer, or the like may be sequentially laminated on one surface or both surfaces of the intermediate layer 2. In the case of the present invention, if the base material of the intermediate layer 2 is too thin, the strength is decreased so that breakage occurs during an irregularity processing operation, or if the base material of the intermediate layer 2 is too thick, the processability is deteriorated when the intermediate layer 2 is enclosed in the paper base material 1. Therefore, also in consideration of the thickness as an anti-counterfeit paper, the thickness of the intermediate layer 2 in the present invention is preferably between 6 µm and 100 µm.

As the base material of the intermediate layer 2, a film-shaped plastic composed of a polymeric material having excellent transparency, high mechanical strength, plasticity, and flexibility such as polyethylene terephthalate, polyvinyl chloride, or polyacrylate is used as needed.

In the intermediate layer 2, in the case where the irregularities are precisely formed, the minute irregularities 3 may be directly molded by applying heat, pressure, or the like to the base material of the intermediate layer 2, or an irregularity forming layer is separately laminated on the base material, and then, the minute irregularities 3 may be molded by applying heat, pressure, or the like thereto. The minute irregularities 3 enable the precise control of the reflection and transmission of a light by the structure thereof. However, in particular, when the minute irregularities 3 have a difference in height in the range of 10 nm to 700 nm and an aspect ratio in the range of 0.5 to 10, the visible light transmittance is easily set to an arbitrary value, and further, an optical change according to the structure can also be exhibited.

As the reflection layer 4, a metal thin film is preferably formed by utilizing a vacuum deposition method for forming a thin film on the surface layer without burying the irregularities of the minute irregularities 3. Examples of the metal to be used for the reflection layer 4 include Al, Sn, Cr, Ni, Cu, Au, and brass. Further, as the vacuum deposition method, a vacuum vapor deposition method, a sputtering method, or the like can be applied, and it is only necessary that the method can control the thickness of the film between 5 nm and 100 nm. In the present invention, in terms of the visible light transmittance, the thickness thereof is preferably 10 nm to 80 nm.

The thickness of the reflection layer 4 in a flat portion may change from that in a portion where the minute irregularities 3 are formed. However, the change in this case is within the range of a desired thickness preliminarily determined.

In the case where the reflection layer 4 is formed by utilizing the above-described vacuum deposition method, even if the processing conditions are fixed, the thickness of the metal thin film changes depending on the surface shape of a deposition target material. However, in the present invention, molding is performed by precisely controlling the surface shape thereof, and therefore, from the stage at which the shape of the irregularities is designed, a change in the thickness of the metal thin film on the irregularities with a variety of shapes can also be predicted in advance. Accordingly, even if the irregularity structure changes inside the minute irregularities 3, desired transmittance and reflectance can be obtained by utilizing this change.

The reflection layer 4 can be partially removed in an arbitrary pattern by a method as follows.

That is, a first method is a method utilizing the above-described printing method. Further, a second method is a method in which a mask having an opening in an image pattern is superimposed on the minute irregularities 3, and then, the reflection layer 4 is formed by vacuum deposition, whereby the reflection layer 4 in the image pattern is formed.

Further, a third method is a method in which first, a solvent-soluble resin layer is provided in a negative pattern, and the reflection layer 4 is formed uniformly on the entire surface so as to cover this solvent-soluble resin layer, and thereafter the solvent-soluble resin layer is removed by dissolving it with the solvent, and at the same time, the reflection layer 4 superimposed on this solvent-soluble resin layer is removed, whereby the remaining reflection layer 4 is formed in an image pattern.

Further, a fourth method is a method in which first, a resin layer which is easily peeled off is provided in a negative pattern on the minute irregularities 3, and the reflection layer 4 is formed uniformly on the entire surface so as to cover this resin layer, and thereafter an adhesive roller, an adhesive paper, or the like is pressed against the reflection layer 4 to remove the reflection layer 4 in the negative pattern by transferring the layer to the adhesive roller, the adhesive paper, or the like, and as a result, the reflection layer 4 is allowed to remain in an image pattern.

Further, a fifth method is a method in which the reflection layer 4 is formed uniformly on the entire surface, and a chemical resistant resin layer is provided in an image pattern on this reflection layer 4, and the exposed reflection layer 4 is removed by dissolving it by applying an alkaline or acidic etching solution. In this case, the chemical resistant resin layer may be removed after the reflection layer 4 is processed in an image pattern, however, it is also possible to allow the chemical resistant resin layer to remain as such and utilize the layer as a protection layer for imparting chemical resistance.

Further, a sixth method is a method in which a photosensitive resin layer is formed on the reflection layer 4 formed uniformly on the entire surface, and light exposure and development in an image pattern are performed, and thereafter, the exposed reflection layer 4 is removed by dissolving it by applying an alkaline or acidic etching solution. Also in this case, it is possible to allow the remaining photosensitive resin layer to remain as such and utilize the layer as a protection layer for imparting chemical resistance.

Further, a seventh method is a method in which the reflection layer 4 formed uniformly on the entire surface is irradiated with a laser light to directly remove the reflection layer 4, and the remaining reflection layer 4 is formed in an image pattern.

Incidentally, in the present invention, the method for forming the reflection layer 4 in a pattern, or the method for changing the thickness thereof are not limited to the above-described methods.

Such a pattern may be a random pattern with no clear meaning, but may be given information recognizable by an observer as a pattern such as a design, a figure, a mark, a letter, a number, or a symbol.

Incidentally, as the printing process for the anti-counterfeit paper of the present invention, the same method as in the case of a conventional paper, that is, a printing method such as an offset printing method, a screen printing method, or a gravure printing method can be used to print a letter or a design, and also a piece forming process using a cutter, a transfer process using a transfer foil thereafter, a sticking process, or the like can be performed.

### Examples

Next, examples in which production was performed based on the above-described first to third embodiments will be described.

### (Example 1)

First, an example of the first embodiment in which the anti-counterfeit paper 11 including the intermediate layer 2 having the processed minute irregularities 3 formed thereon was enclosed in the paper base material 1 was produced will be described.

As the base material of the intermediate layer 2, a transparent polyethylene terephthalate film having a thickness of 25 µm was used. A metal roller having a shape inverted from that of the desired minute irregularities 3 was heated to 195°C (Celsius degrees) and pressed against the base material of the intermediate layer 2, and at the same time, a smooth metal roller was pressed against the opposite side thereof, whereby the minute irregularities 3 were formed. Subsequently, further on the entire surface where the minute irregularities 3 were formed, as the reflection layer 4, an Al metal thin film layer having a thickness of 10 to 60 nm was formed by a vacuum vapor deposition method, whereby the intermediate layer 2 was produced.

Subsequently, a softwood pulp was beaten in water, and the raw material concentration was adjusted to 1.5%, and thereafter, by using a device for handmade papers, a paper making process was performed once, and on the softwood pulp formed into a paper layer, the intermediate layer 2 was placed, and then, the paper making process was performed once again to combine a newly formed paper layer and the previously formed paper layers with one another. Subsequently, dehydration and drying were performed, whereby the anti-counterfeit paper 11 of the present invention having a weight of 100 g/m² was produced (corresponding to the anti-counterfeit paper 11 shown in Figs. 1 to 5) .

The thus produced anti-counterfeit paper 11 had the transparent intermediate layer 2 enclosed in the paper base material 1, however, the surface of the paper did not have irregularities like a general watermarked paper and was smooth, and therefore, the printability of the anti-counterfeit paper 11 was favorable, and further, even when a letter was written thereon by hand, the writing was not disturbed by the irregularities. On the other hand, when the anti-counterfeit paper 11 was observed in a backlight environment, a watermark pattern with a rich gradation could be observed.

### (Example 2)

Next, the anti-counterfeit paper 12 according to the second embodiment in which the intermediate layer 2 having the minute irregularities 3 and the reflection layer 4 was not exposed on the edge portion of the paper base material 1 will be described.

As the base material of the intermediate layer 2, a transparent polyethylene terephthalate film having a thickness of 25 µm was used. A metal roller having a shape inverted from that of the desired minute irregularities 3 was heated to 195°C and pressed against the base material of the intermediate layer 2, and at the same time, a smooth metal roller was pressed against the opposite side thereof, whereby the minute irregularities 3 were formed. Further, on the entire surface where the minute irregularities 3 were formed, as the reflection layer 4, an Al metal thin film layer having a thickness of 10 to 60 nm was formed by a vacuum vapor deposition method. In this manner, the intermediate layer 2 was produced.

Subsequently, a softwood pulp was beaten in water, and the raw material concentration was adjusted to 1.5%, and thereafter, by using a paper making mesh and a device for handmade papers, a paper making process was performed once, and on the softwood pulp formed into a paper layer, the intermediate layer 2 having a size slightly smaller than the softwood pulp formed into a paper layer was placed at a desired position, and then, the paper making process was performed once again to combine a newly formed layer and the previously formed layers with one another. Subsequently, dehydration and drying were performed, whereby the anti-counterfeit paper 12 of the present invention having a weight of 100 g/m² was produced (corresponding to the anti-counterfeit paper 12 shown in Figs. 6 to 8).

In the thus produced anti-counterfeit paper 12, the intermediate layer 2 was completely enclosed in the paper base material 1, and therefore, the intermediate layer 2 was not exposed on an edge portion of the anti-counterfeit paper 12, and was in a completely enclosed state, and thus, it was impossible to make an alteration that the intermediate layer 2 was peeled off from the paper base material 1.

Further, also in this anti-counterfeit paper 12, the surface of the paper did not have irregularities like a general watermarked paper and was smooth, and therefore, the printability of the anti-counterfeit paper 12 was favorable, and further, even when a letter was written thereon by hand, the writing was not disturbed by the irregularities. On the other hand, when the anti-counterfeit paper 12 was observed in a backlight environment, a watermark pattern with a rich gradation could be observed.

### (Example 3)

Next, the anti-counterfeit paper 13 according to the third embodiment in which the intermediate layer 2 having the minute irregularities 3 formed on one surface thereof and the reflection layer 4 laminated thereon was enclosed in the paper base material 1 provided with the window part 5 will be described.

As the base material of the intermediate layer 2, a transparent polyethylene terephthalate film having a thickness of 12 µm was used. A metal roller having a shape inverted from that of the desired minute irregularities 3 was heated to 195°C and pressed against the base material of the intermediate layer 2, and at the same time, a smooth metal roller was pressed against the opposite side thereof, whereby the minute irregularities 3 were formed. Subsequently, further on the entire surface where the minute irregularities 3 were formed, as the reflection layer 4, an Al metal thin film layer having a thickness of 10 to 60 nm was formed by a vacuum vapor deposition method, whereby the intermediate layer 2 was produced.

Subsequently, a softwood pulp was beaten in water, and the raw material concentration was adjusted to 1.5%, and thereafter, by using a paper making mesh processed with a metal so that a circle-shaped window was partially formed, and a device for handmade papers, a paper making process was performed once. Thereafter, on the softwood pulp formed into a paper layer, the intermediate layer 2 was placed so that the position of an image 6 made by the minute irregularities 3 formed on the intermediate layer 2 and the position of the circle-shaped window part 5 in the softwood pulp previously formed into a paper layer were aligned with a desired position, and then, the paper making process was performed once again to combine a newly formed layer and the previously formed layers with one another. Subsequently, dehydration and drying were performed, whereby the anti-counterfeit paper 13 of the present invention having a weight of 100 g/m² was produced (corresponding to the anti-counterfeit paper 13 shown in Figs. 9 to 11).

When the thus produced anti-counterfeit paper 13 was observed in front light environment, in the window part 5, depending on the angle of observation of the exposed intermediate layer 2, an optical change that the design, color, or shading changes could be clearly observed. Further, in a portion where the intermediate layer 2 was not exposed and was enclosed in the paper base material 1, the surface was smooth like a paper with no watermark, and the printability and writability were favorable. On the other hand, in a backlight state, in the window part 5, due to a transmitted light transmitted through the exposed intermediate layer 2, a shading image with no color could be observed, and in a portion other than the window part 5, due to the transparent intermediate layer 2 enclosed in the paper base material 1, a watermark pattern with a rich gradation could be observed.

In this manner, the above-described anti-counterfeit papers 11, 12, and 13 achieve the effect of "a watermark with a gradation" which is an anti-counterfeit technique having been used only for paper money conventionally in Japan not by a change in the thickness of an anti-counterfeit paper per se or irregularities on the surface thereof, but by the minute irregularities 3 and the reflection layer 4 formed on the intermediate layer 2 enclosed therein. Further, on the front and back surfaces of a conventional watermarked paper, irregularities due to a change in the thickness of the paper are generated. However, the front and back surfaces of the anti-counterfeit papers 11, 12, and 13 are all smooth, and therefore, these papers all have excellent processability and printability. Further, a structure in which the window part 5 is provided in the paper base material 1 to expose the intermediate layer 2 thereon, and an optical change is exhibited in the portion where the intermediate layer is exposed is formed, and therefore, the anti-counterfeit effect is also high. In this manner, it is found that the anti-counterfeit paper of the present invention is more difficult to counterfeit or alter although the determination of genuineness is the same as in the conventional art using a black watermark.

### Industrial Applicability

According to the present invention, a watermarked paper with multiple gradations can be produced by a method different from a watermarking method, and the strength and the surface smoothness are high, and a configuration in which the intermediate layer enclosed therein is exposed on a portion of the paper, and an optical change is exhibited in the exposed portion is adopted, and therefore, an anti-counterfeit paper which is difficult to alter or counterfeit can be provided. Reference Sings List

1: paper base material
2: intermediate layer
3: minute irregularities
4: reflection layer
5: window part
6: minute irregularities exposed on window part and observable design
11: anti-counterfeit paper
12: anti-counterfeit paper
13: anti-counterfeit paper
31: watermark pattern observable in backlight environment

## Claims

1. An anti-counterfeit paper comprising a watermarked image, said anti-counterfeit paper comprising an intermediate layer enclosed in a paper layer, **characterized in that**
the intermediate layer (2) is composed of a base material which is transparent and has a uniform thickness of 6 µm to 200 µm, and at least a portion of at least one flat surface of the base material has minute irregularities (3) having a shape of convex portions varying from place to place, :
- in height (Y1, Y2, Y3), from a base of a convex portion, situated on the flat surface of the base material, to its top, in the range of 10 nm to 700 nm,
- and in an aspect ratio in the range of 0.5 to 10, said aspect ratio being defined as:
o the height (Y1, Y2, Y3),
o divided by a pitch defined as a distance between two successive convex portions (X1, X2, X3),
said difference in shape of said minute irregularities inducing changes of visible light transmittance, when said paper is observed with a transmitted light, defining thus said watermarked image,
and at least a portion of a surface in contact with the minute irregularities has a reflection layer, so that the visible light transmittance is continuously changed, whereby a given watermark with a continuous gradation can be obtained.

2. The anti-counterfeit paper according to claim 1, **characterized in that** the reflection layer is provided in a portion of the intermediate layer.

3. The anti-counterfeit paper according to claim 1 or 2, **characterized in that** the intermediate layer is embedded in the paper layer.

4. The anti-counterfeit paper according to any one of claims 1 to 3, **characterized in that** a portion of the intermediate layer is exposed on at least one surface of the anti-counterfeit paper.

5. The anti-counterfeit paper according to any one of claims 1 to 4, **characterized in that** the minute irregularities of the intermediate layer are provided in a given pattern, and the position of the pattern and the position of the portion where the intermediate layer is exposed on the anti-counterfeit paper are aligned one with another.

## Patentansprüche

1. Fälschungssicheres Papier, umfassend ein Wasserzeichen-Bild, wobei das fälschungssichere Papier eine Zwischenschicht umfasst, welche in einer Papierschicht eingeschlossen ist, **dadurch gekennzeichnet, dass**
die Zwischenschicht (2) aus einem Basismaterial besteht, welches transparent ist und eine gleichförmige Dicke von 6 µm bis 200 µm aufweist, und wenigstens ein Abschnitt von wenigstens einer ebenen Fläche des Basismaterials winzige Unregelmäßigkeiten (3) aufweist, welche eine Form von konvexen Abschnitten aufweisen, welche von Ort zu Ort variieren:
- in ihrer Höhe (Y1, Y2, Y3) von einer Basis eines konvexen Abschnitts, welcher an der ebenen Fläche des Basismaterials befindlich ist, bis zu seiner Spitze, in dem Bereich von 10 nm bis 700 nm,
- und in einem Seitenverhältnis in dem Bereich von 0,5 bis 10, wobei das Seitenverhältnis definiert ist als:
o die Höhe (Y1, Y2, Y3),
o geteilt durch einen Abstand, definiert als eine Distanz zwischen zwei aufeinanderfolgenden konvexen Abschnitten (X1, X2, X3),
wobei die Differenz in der Form der winzigen Unregelmäßigkeiten Änderungen eines Transmissionsvermögens von sichtbarem Licht hervorruft, wenn das Papier mit einem transmittierten Licht betrachtet wird, wobei hierdurch das Wasserzeichen-Bild definiert ist,
und wobei wenigstens ein Abschnitt einer Fläche in Kontakt mit den winzigen Unregelmäßigkeiten eine Reflexionsschicht aufweist, so dass sich das Transmissionsvermögen für sichtbares Licht kontinuierlich ändert, wobei ein gegebenes Wasserzeichen mit einer kontinuierlichen Abstufung erhalten werden kann.

2. Fälschungssicheres Papier nach Anspruch 1, **dadurch gekennzeichnet, dass** die Reflexionsschicht in einem Abschnitt der Zwischenschicht bereitgestellt ist.

3. Fälschungssicheres Papier nach Anspruch 1 oder 2, **dadurch gekennzeichnet, dass** die Zwischenschicht in der Papierschicht eingebettet ist.

4. Fälschungssicheres Papier nach einem der Ansprüche 1 bis 3, **dadurch gekennzeichnet, dass** ein Abschnitt der Zwischenschicht an wenigstens einer Fläche des fälschungssicheren Papiers freigelegt ist.

5. Fälschungssicheres Papier nach einem der Ansprüche 1 bis 4, **dadurch gekennzeichnet, dass** die winzigen Unregelmäßigkeiten der Zwischenschicht in einem gegebenen Muster bereitgestellt sind, und die Position des Musters und die Position des Abschnitts, in welchem die Zwischenschicht an dem fälschungssicheren Papier freigelegt ist, miteinander ausgerichtet sind.

## Revendications

1. Papier anti-contrefaçon comprenant une image filigranée, ledit papier anti-contrefaçon comprenant une couche intermédiaire enfermée dans une couche de papier, **caractérisé en ce que**
la couche intermédiaire (2) est composée d'un matériau de base qui est transparent et a une épaisseur uniforme de 6 µm à 200 µm, et au moins une partie d'au moins une surface plane du matériau de base présente des irrégularités minuscules (3) ayant une forme de parties convexes variant d'un emplacement à l'autre, :
- en hauteur (Y1, Y2, Y3), à partir d'une base d'une partie convexe, située sur la surface plane du matériau de base, jusqu'à son sommet, de 10 nm à 700 nm,
- et dans un rapport d'aspect de 0,5 à 10, ledit rapport d'aspect étant défini comme suit :
o la hauteur (Y1, Y2, Y3),
o divisée par un pas défini comme une distance entre deux parties convexes successives (X1, X2, X3),
ladite différence de forme desdites irrégularités minuscules induisant des modifications de transmittance de la lumière visible, lorsque ledit papier est observé avec une lumière transmise, définissant ainsi ladite image filigranée,
et au moins une partie d'une surface en contact avec les irrégularités minuscules a une couche réfléchissante, de sorte que la transmittance de la lumière visible soit modifiée en continu, grâce à quoi un filigrane ayant une gradation continue peut être obtenu.

2. Papier anti-contrefaçon selon la revendication 1, **caractérisé en ce que** la couche réfléchissante est prévue dans une partie de la couche intermédiaire.

3. Papier anti-contrefaçon selon la revendication 1 ou 2, **caractérisé en ce que** la couche intermédiaire est noyée dans la couche de papier.

4. Papier anti-contrefaçon selon l'une quelconque des revendications 1 à 3, **caractérisé en ce qu'**une partie de la couche intermédiaire est exposée sur au moins une surface du papier anti-contrefaçon.

5. Papier anti-contrefaçon selon l'une quelconque des revendications 1 à 4, **caractérisé en ce que** les irrégularités minuscules de la couche intermédiaire sont prévues dans un motif donné, et la position du motif et la position de la partie où la couche intermédiaire est exposée sur le papier anti-contrefaçon sont alignées l'une avec l'autre.
